# EUROPEAN PATENT SPECIFICATION

(11) **EP 0 451 393 B1**
(45) Date of publication and mention of the grant of the patent: **15.02.1995**
(21) Application number: 90303930.3
(22) Date of filing: 11.04.1990
(51) Int. Cl.: F16K 1/10, F16K 31/46, B05B 9/08

(54) **A valve**
Ventil
Valve

(43) Date of publication of application: 16.10.1991
(73) Proprietor: NOMIX-CHIPMAN LIMITED, Staple Hill, Bristol BS16 4PS (GB)
(72) Inventor: Ali, Eren, Bristol BS8 1AP (GB)
(74) Representative: Cheyne, John Robert Alexander Mackenzie

(56) References cited:
- FR-A- 508 275
- FR-A- 669 020
- FR-A- 761 311
- FR-A- 1 230 056
- FR-A- 1 318 661
- FR-A- 1 526 193
- US-A- 3 877 480

## Description

This invention relates to a valve, and is particularly, although not exclusively, concerned with a valve suitable for use in controlling the flow of herbicide in a hand-held herbicide applicator of the type disclosed in EP-A-0300762.

EP-A-0300762 discloses a herbicide applicator having a handset incorporating a valve for controlling the flow of herbicide from a container to a delivery head of the applicator. The valve is operated by means of a trigger, acting on a closure element of the valve through a linkage. The closure element of the valve is displaced in a direction parallel to the general flow of liquid through the valve and, as a result of the handset design, this means that the linkage applies, to the closure member, an operating force acting in a direction oblique to the direction of displacement of the closure element. Consequently, the force which must be applied by the operator is somewhat greater than would be necessary if the line of action of the applied force coincided with the movement direction of the closure member. Also, since the force applied to the closure element has a sideways component, non-uniform wear occurs between the closure element and the valve body.

FR-A-508275 discloses a valve comprising a valve body having an inlet, an outlet and a valve seat disposed between the inlet and the outlet, the valve further comprising a valve closure element which is displaceable within the valve body to open and close the valve, the closure element comprising a one-piece component having a valve head, cooperating with the valve seat, and an operating stem extending through the valve seat and through a guide passage in the wall of the valve body, the valve seat lying in a plane which is perpendicular to the direction of operative displacement of the closure element.

In the valve of FR-A-508275, the inlet and the outlet are inclined to each other, and the direction of operative displacement of the closure element is parallel to the inlet. The closure member can be inserted through an opening in the valve housing in which the inlet is provided. Such a valve is not suitable for applications in which the inlet and the outlet of the valve are to be in line with each other.

According to the present invention, the inlet and the outlet are aligned with each other, the direction of operative displacement of the closure element being oblique to the flow direction through the inlet and the outlet, and the valve body has an insertion aperture through which, during assembly of the valve, the closure element is inserted into the valve body in an initial direction generally parallel to the flow direction through the inlet and the outlet.

With such a construction, the insertion aperture can serve as an inlet of the valve either with its full bore or after insertion of a plug having an inlet passage formed within it. The plug, if provided, may serve as an abutment for a spring acting on the closure element for biassing the closure element towards the valve seat. To this end, the plug may be provided with a concave, generally conical, surface to serve as the abutment for the spring.

The guide passage for the closure element may be provided in a collar which is set into a bore in the wall of the valve body. The bore may have the same diameter as the valve seat opening.

At a position adjacent the insertion aperture, the valve body may be fixed to, or formed integrally with, a mounting bulkhead for mounting the valve in equipment, such as a herbicide applicator, with which the valve is to be used. The mounting bulkhead may serve to retain the plug, if provided, in position within the insertion aperture.

In use, the closure element may be operated by means of an elongate operating member which extends generally parallel to the displacement direction of the closure member. In a preferred embodiment, the operating member extends parallel to the operating stem in a direction from a free end of the operating stem towards the valve head.

For a better understanding of the present invention, and to show how it may be carried into effect, reference will now be made, by way of example, to the accompanying drawings, in which:
Figure 1 shows a herbicide applicator;
Figure 2 shows a handset and herbicide container of the applicator shown in Figure 1, with the container detached from the handset;
Figure 3 corresponds to Figure 2, but shows the container fitted to the handset;
Figure 4 is a view, on an enlarged scale, of part of Figure 2;
Figure 5 is a view, on an enlarged scale, of part of Figure 3;
Figure 6 is a sectional view of an outlet fitting of the container;
Figure 7 shows the container with a cap fitted to the outlet;
Figure 8 shows the container with the cap released from the outlet;
Figure 9 is an end view of the container with the cap fitted; and
Figure 10 corresponds to Figure 9, but shows the cap removed.

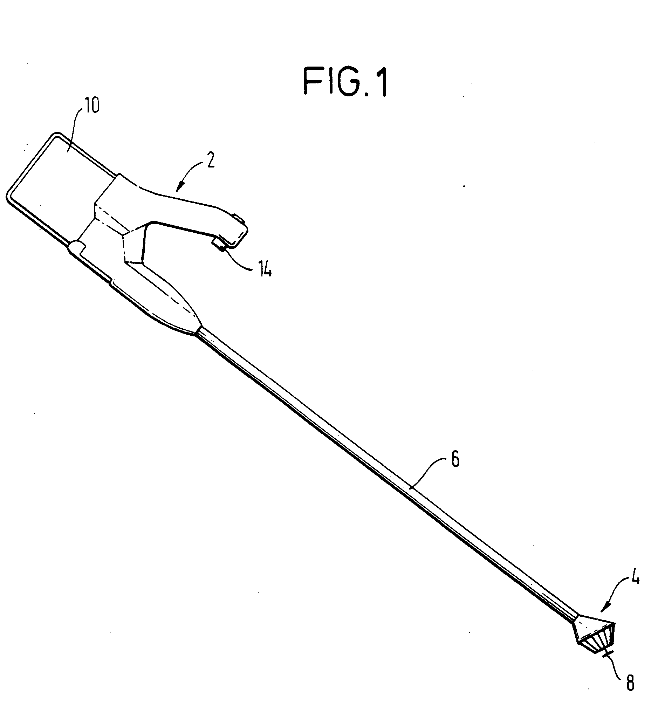

Figure 1 shows a herbicide applicator having a handset 2 and a delivery head 4 which is connected to the handset 2 by a support tube 6. The delivery head 4 accommodates an electric motor (not shown) which drives a spinning disc 8.

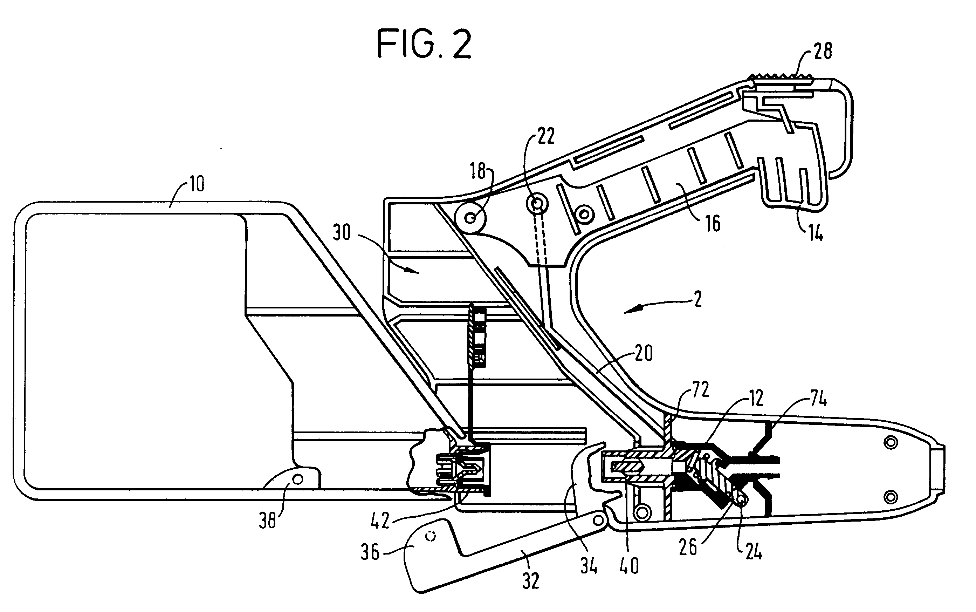

The handset 2 receives a container 10 of herbicide, and also accommodates one or more batteries (not shown). A supply duct and electrical leads extend along the support tube 6 to supply herbicide and electrical power to the delivery head 4. A control valve 12 (Figure 2) is provided in the handset 2 for controlling the flow of herbicide from the container 10 to the delivery head 4. The valve 12 is operated by means of a trigger 14 on the handset. The trigger 14 also controls an electrical switch (not shown) for controlling the supply of electrical current to the motor in the delivery head 4.

In use, the applicator is carried by a walking operator, in order to dispense herbicide over plants, or areas of ground, to be treated. With the container 10 fitted to the handset 2, operation of the trigger 14 opens the valve 12, allowing the herbicide to flow from the container 10 to the spinning disc. Operation of the trigger 14 also actuates a switch (not shown) in the handset, so that electric current flows to the motor in the head 4, which rotates the disc 8. The herbicide is thus discharged from the disc 8 in the form of droplets.

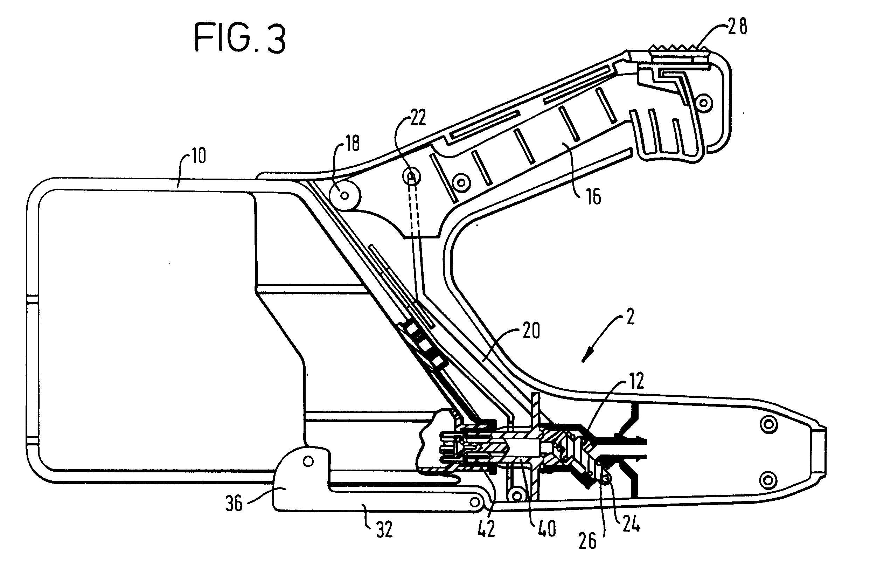

The handset 2 and the container 10 are shown in greater detail in Figures 2 and 3. It will be appreciated from Figures 2 and 3 that the trigger 14 is provided at one end of an operating lever 16 which is pivotally connected to the body of the handset for movement about a pivot axis 18. A cranked operating rod 20 is connected at one end 22 to the lever 16 and at the other end 24 to an operating stem 26 of the valve 12. A slide 28 is provided for retaining the trigger 14 in an operating position.

The handset 2 has a recess 30 for receiving a leading end of the container 10. A latching member 32 is pivotally connected to the handset 2 and has a cam portion 34 and a detent portion 36. As the container 10 is inserted into the recess 30, a leading face of the container 10 engages the cam portion 34, causing the latching member 32 to pivot upwardly, as viewed in Figure 2, to bring the detent portion 36 into engagement with a recess 38 in the container. The latched position is shown in Figure 3.

The valve 12 has an inlet spigot 40 which projects into the recess 30. The container 10 has an outlet fitting 42 which, when the container 10 is latched within the recess 30, engages the inlet spigot 40.

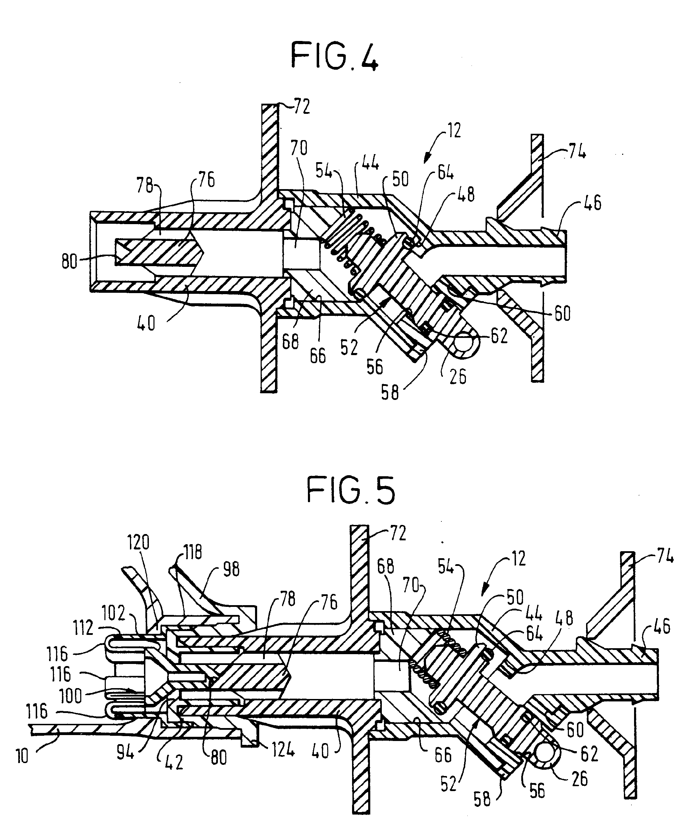

Figure 4 shows the valve 12 in the condition corresponding to Figure 2, while Figure 5 shows the valve 12 and the outlet fitting 42 in the condition corresponding to Figure 3. The valve 12 comprises a valve body 44 having an outlet 46. Within the valve body 44 there is a valve seat 48 which, in the condition shown in Figure 4, is engaged by a valve head 50 of a valve closure element 52, which thus, prevents communication between the inlet spigot 40 and the outlet 46. The valve head 50 is maintained against the valve seat 48 by a spring 54. The closure element 52 is a one-piece moulded component, for example of plastics material, comprising both the valve head 50 and the operating stem 26. The operating stem 26 extends from the valve head 50 through the valve seat 48 and through a guide passage 56 formed in a collar 58 which is set into a bore 60 in the valve body 44. A sealing ring 62 is provided between the operating stem 26 and the bore 56. A further sealing ring 64 is provided to ensure a reliable seal between the valve head 50 and the seat 48, when the valve is closed.

It will be appreciated from Figure 3 that the portion of the operating rod 20 which engages the operating stem 26 extends parallel to the movement direction of the valve element 52, the rod 20 extending in the direction from the free end of the operating stem 26 towards the valve head 50. Thus, the line of action of operating force applied to the rod 20 is in the same direction as the operating direction of the closure element 52, with the result that sideways forces are not applied to the closure element 52 during operation.

At a position away from the outlet 46, the valve body 44 has an insertion aperture 66. This insertion aperture 66 is partially closed by a plug 68, in which an inlet passage 70 is formed. The plug 68 is retained within the insertion aperture 66 by the spigot 40, which is welded, or otherwise secured, to the valve body 44. The spigot 40 is provided with a bulkhead mounting 72, by which the valve 12 is secured within the handset 2. A further partition 74 engages the outlet 46 to ensure a firm location for the valve 12.

An abutment 76 is supported within the spigot 40 by radial webs 78. At its end facing away from the valve 12, the abutment 76 has a conical recess 80.

The valve body 44 can be produced from plastics material by a moulding operation in a relatively simple manner. Thus, the insertion aperture and the part of the interior of the valve body 44 which accommodates the valve head 50 can be formed by means of a first core, the interior of the outlet 46 can be formed by means of a second core, and the bore 60 and the circumferential wall of the valve seat 48 can be formed by means of a third core. After moulding of the valve body 44, the collar 58 is inserted into the bore 60. Then the closure element 52, with the seals 62 and 64 and the spring 54 mounted on it, is inserted, operating stem 26 first, into the insertion aperture 68 in a direction generally parallel to that of the outlet. The closure element 52 can then be tilted to direct the operating stem 26 through the guide passage 56. Subsequently, the plug 68 is inserted and the spigot 40 is fitted to the valve body 44 and secured, for example by welding.

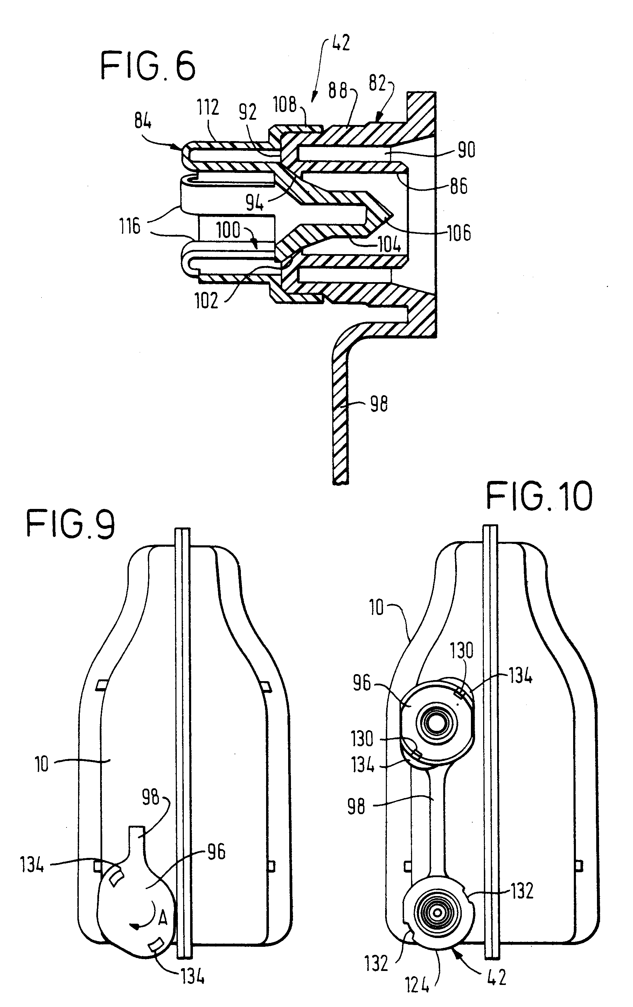

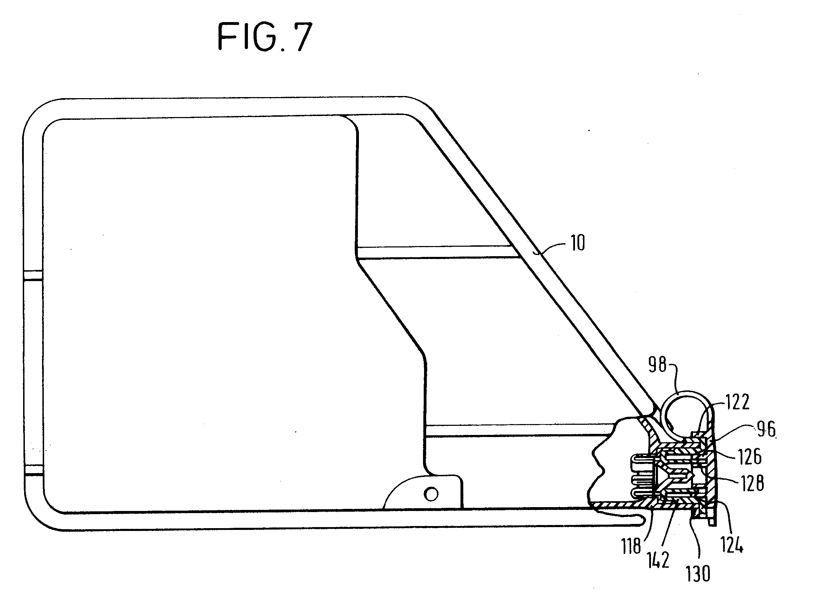

The outlet fitting 42 of the container 10 is shown in greater detail in Figure 6. The fitting 42 comprises a seat element 82 and a valve element 84, both of which are made from plastics material. The seat element 82 comprises inner and outer walls 86, 88 respectively which defines between them an annular recess 90. The inner and outer walls 86, 88 are connected together at one end by an annular web 92. This annular web 92 projects inwards beyond the inner wall 86 and terminates at a frusto conical seating face 94. At its end away from the web 92, the seal element 82 has an outwardly projecting flange 124. A cap 96 (Figures 7 to 10) is moulded integrally with the seat element 82, and is connected to the flange 124 by a strap 98.

The valve element 84 comprises a sealing body 100 which has a frusto conical sealing face 102 and a projecting pin 104. A frusto conical transitional region 103 is provided between the sealing face 102 and the pin 104. The pin 104 terminates at a conical surface 106 which is complementary to the conical recess 80 at the end of the abutment 76. The sealing body 100 is surrounded by a skirt 108 which is connected to the sealing body 100 by a cylindrical portion 112 and by five flexible straps 116, which are flexed through an angle of 180°.

As shown in Figure 5, the fitting 42 is received in a boss 118 formed on the end of the container 10. At its inner end, the boss 118 terminates at a shoulder 120 against which abuts the transition between the skirt 108 and the cylindrical portion 112. The outer wall 88 of the seat element 82 is received within the skirt 108, and the seat element 82 is secured within the boss 118, for example by welding.

As shown in Figure 6, the seating face 94 of the seat element 82 engages the sealing face 102 of the sealing body 100, and deflects the sealing body 100 slightly to the left relatively to the unstressed configuration of the valve element 84. Thus, the sealing body 100 is biassed into contact with the seating face 94 by the resilience of the flexible straps 116. Consequently, the fitting 42 normally prevents outflow of the contents of the container 10. However, as shown in Figure 5, insertion of the container 10 into the recess 30 in the handset 2 results in contact between the conical surface 106 of the pin 104 and the conical recess 80 of the abutment 76. This causes the sealing face 102 to be retracted, against the resilient force applied by the flexible straps 116, away from the seating face 94, permitting flow through the fitting 42, via the gaps between the straps 116. Removal of the container 10 from the recess 30 results in the automatic closing of the valve constituted by the sealing body 100 and the seat element 82.

It will be appreciated from Figure 5 that, as the fitting 42 moves towards the spigot 40, the extreme end of the spigot 40 will initially enter the annular recess 90 in a sealing-tight manner before the pin 104 engages the abutment 76. Consequently, no flow will take place through the fitting 42 before the spigot 40 and the fitting 42 have made sealing engagement with each other. Also, because the pin 104 is accommodated within the inner wall 86 of the seat element 82, and because the surface 106 is conical, accidental opening of the valve in the fitting 42 is avoided. Furthermore, the valve within the fitting 42 has a degree of child resistance. Any attempt by a child to push the pin 104 inwards by finger pressure will be painful as a consequence of the point at the end of the conical surface 106. Similarly, the provision of the conical surface prevents operation of the valve by an implement such as a pencil, since the implement will merely slide sideways off the conical surface 106.

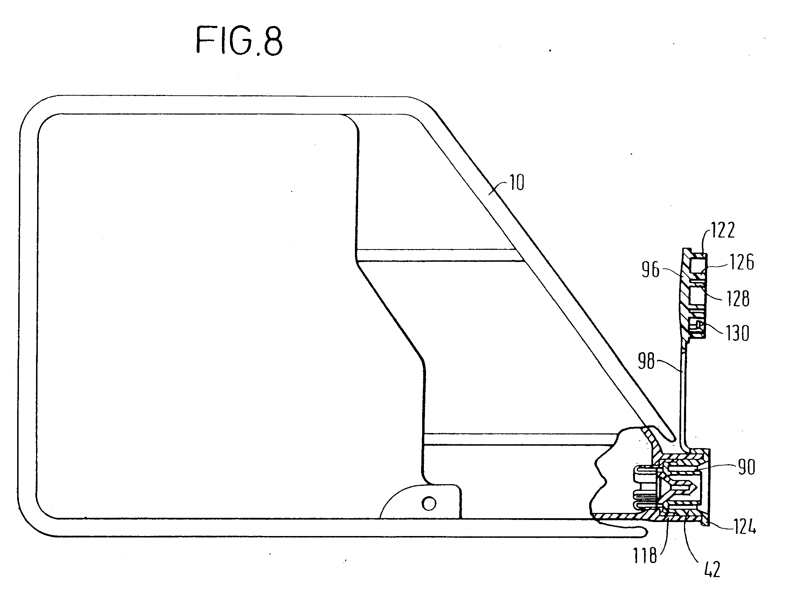

Further resistance to accidental spillage of the contents of the container 10 is achieved by the cap 96. As shown in Figures 7 and 8, the cap 96 comprises an outer skirt 122 for engagement over a flange 124 of the seat element 82, an intermediate skirt 126 for engagement in the annular recess 90, and an inner skirt 128 for engagement with the inner surface of the inner wall 86. Consequently, when the cap is fitted, as shown in Figure 7, secure sealing engagement with the fitting 42 is made.

The outer skirt 122 is provided with two oppositely disposed barbs 143. The flange 124 of the seating element 82 has two corresponding oppositely disposed notches 132. As will be appreciated from Figure 10, the barbs 130 and the notches 132 do not coincide respectively with one another when the cap is placed over the fitting 42 in a manner which creates least torsional stress in the strap 98 about the axis of the fitting 42. Nevertheless, in this position of lease torsional stress, the cap can be snapped over the fitting 42, with the barbs 130 engaging the flange 124.

The barbs 130 engage the flange 124 sufficiently firmly in this position to prevent removal of the cap from the fitting 42. To remove the cap 96, it must first be rotated relatively to the container 10 in the direction of the arrow A in Figure 9 until the barbs 130 coincide with the notches 132. Even in this position, the barbs 130 still engage beneath the flange 124, but the reduced extent of the flange 124 at the notches 132 makes it possible to disengage the barbs 130, one at a time, by pulling outwardly on lugs 134 on the cap 96.

It will be appreciated that rotation of the cap 96 in the direction of the arrow A will induce torsional stress in the strap 98, so as to resist such turning. This factor, combined with the need to align the barbs 130 correctly with the notches 132, improves the resistance of the cap to opening by children.

Containers 10 of herbicide for use with the applicator shown in Figure 1 will be supplied with the cap 96 fitted, and possibly retained in place by some auxiliary means, such as adhesive tape. The operator then removes the cap by rotating it in the direction A as shown in Figure 9 until the barbs 130 are aligned with the notches 132, and then pulls off the cap by tugging on one or other of the lugs 134. Even though the cap is removed, flow from the container 10 is still prevented by the valve provided in the fitting 42.

With the cap 96 removed, the container is inserted into the recess 30 in the handset, as shown in Figure 2. This causes the end of the spigot 40 to enter the annular recess 90, so creating a seal between the fitting 42 and the spigot 40. After the creation of this seal, the abutment 76 is engaged by the pin 104, and subsequent movement of the container 10 to the fully engaged position in the handset 2 causes the sealing body 100 to be displaced from the seating face 94, permitting flow from the container 10 through the spigot 40 to the valve 12.

When the container 10 is inserted into the recess 30, the cap is accommodated within a clearance provided between the front face of the container 10 and an adjacent wall of the recess 30, as shown in Figure 3.

For operation, the operator depresses the trigger 14, so energising the motor in the delivery head 4 and, via the lever 16 and the operating rod 20, opening the valve 12. Flow of herbicide then takes place through the valve 12 to the outlet 46, and thence, through the supply duct in the support tube 6, to the distribution head 4.

When a treatment operation is completed and the trigger 14 released to close the valve 12, the container 10 is ejected from the handset 2 by lowering the latching member 32 to the position shown in Figure 2. The resulting movement of the cam 34 pushes the container 10 away from the valve 12, so disengaging the pin 104 from the abutment 76, and finally disengaging the spigot 40 from the annular recess 90. During this operation, the sealing body 100 is returned, under the resilient forces applied by the flexible membrane 110, into sealing engagement with the seating face 94, so preventing further flow from the container 10. Added safety is then achieved by refitting the cap 96 by merely snapping it over the flange 124.

## Claims

1. A valve comprising a valve body (44), having an inlet (70), an outlet (46) and a valve seat (48) disposed between the inlet (70) and the outlet (46), the valve further comprising a valve closure element (52) which is displaceable within the valve body (44) to open and close the valve, the closure element (52) comprising a one-piece component having a valve head (50), cooperating with the valve seat (48), and an operating stem (26) extending through the valve seat (48) and through a guide passage (56) in the wall of the valve body (44), the valve seat (48) lying in a plane which is perpendicular to the direction of operative displacement of the closure element (52), characterised in that the inlet (70) and the outlet (46) are aligned with each other, the direction of operative displacement of the closure element (52) being oblique to the flow direction through the inlet (70) and the outlet (46), and in that the valve body (44) has an insertion aperture (66) through which, during assembly of the valve, the closure element (52) is inserted into the valve body (44) in an initial direction generally parallel to the flow direction through the inlet (70) and the outlet (46).

2. A valve as claimed in claim 1, characterised in that the inlet (70) is provided in the insertion aperture (66).

3. A valve as claimed in claim 2, characterised in that a plug (68) is received in the insertion aperture (66), the inlet (70) comprising a passage through the plug (68).

4. A valve as claimed in claim 3, characterised in that a spring (54) acts between the closure element (52) and the plug (68) to bias the closure element (52) towards the valve seat (48).

5. A valve as claimed in claim 4, characterised in that the plug (68) has a concave, generally conical, surface against which the spring (54) abuts.

6. A valve as claimed in any one of the preceding claims, characterised in that the guide passage (56) is provided in a collar (58) which is received in a bore (60) formed in the wall of the valve body (44).

7. A valve as claimed in claim 6, characterised in that the bore (60) has the same diameter as the opening of the valve seat (48).

8. A valve as claimed in any one of the preceding claims, characterised in that the valve body (44) is provided, at a position adjacent the insertion aperture (66), with a mounting bulkhead (72).

9. A valve as claimed in any one of the preceding claims, characterised in that an operating member (20) engages the operating stem (26), the operating member (20) extending generally parallel to the displacement direction of the closure member (52).

10. A herbicide applicator comprising a container (10) for herbicide and a delivery head (4) for delivering herbicide supplied from the container (10), the flow of herbicide from the container (10) to the delivery head (4) being controlled by a valve (12) in accordance with any one of the preceding claims, the operating stem (26) of the valve (12) being connected for operation to a manual control member (14).

## Patentansprüche

1. Ventil, umfassend
einen Ventilkörper (44), der einen Einlaß (70), einen Auslaß (46) und einen zwischen dem Einlaß (70) und dem Auslaß (46) angebrachten Ventilsitz (48) aufweist,
ferner ein Ventilabsperrbauteil (52), das zum Öffnen und Schließen des Ventils innerhalb des Ventilkörpers (44) verschiebbar ist, wobei das Absperrbauteil (52) eine einteilige Komponente umfaßt, die einen Ventilteller (50) aufweist, der mit dem Ventilsitz (48) zusammenwirkt und eine Bedienstange (26), die durch den Ventilsitz (48) sowie durch einen Führungsdurchgang (56) in der Wand des Ventilkörpers (44) verläuft, und der Ventilsitz (48) in einer Ebene liegt, die senkrecht zur Verschiebungsrichtung bei Betrieb des Absperrbauteils (52) steht, dadurch gekennzeichnet, daß
der Einlaß (70) und der Auslaß (46) auf einer Linie liegen, wobei die Verschiebungsrichtung bei Betrieb des Absperrbauteils (52) schräg zur Flußrichtung durch den Einlaß (70) und den Auslaß (46) ist, und dadurch,
daß der Ventilkörper (44) eine Einbauöffnung (66) hat, durch die beim Zusammenbau des Ventils das Absperrbauteil (52) in den Ventilkörper (44) eingesetzt wird in einer ursprünglichen Richtung, die im allgemeinen parallel zur Flußrichtung durch den Einlaß (70) und den Auslaß (46) ist.

2. Ventil nach Anspruch 1, dadurch gekennzeichnet, daß der Einlaß (70) in der Einbauöffnung (66) bereitgestellt ist.

3. Ventil nach Anspruch 2, dadurch gekennzeichnet, daß ein Stopfen (68) in der Einbauöffnung (66) aufgenommen ist, wobei der Einlaß (70) einen Durchgang durch den Stopfen (68) enthält.

4. Ventil nach Anspruch 3, dadurch gekennzeichnet, daß eine Feder (54) zwischen dem Absperrbauteil (52) und dem Stopfen (68) zum Vorspannen des Absperrbauteils (52) gegen den Ventilsitz (48) wirkt.

5. Ventil nach Anspruch 4, dadurch gekennzeichnet, daß der Stopfen (68) eine konkave, im allgemeinen konische Oberfläche aufweist, an die die Feder (54) anstößt.

6. Ventil nach irgendeinem der vorhergehenden Ansprüche, dadurch gekennzeichnet, daß der Führungsdurchgang (56) mit einem Bund (58) versehen ist, der in einer in der Wand des Ventilkörpers (44) gebildeten Bohrung (60) aufgenommen ist.

7. Ventil nach Anspruch 6, dadurch gekennzeichnet, daß die Bohrung (60) den gleichen Durchmesser wie der Ventilsitz (48) hat.

8. Ventil nach irgendeinem der vorhergehenden Ansprüche, dadurch gekennzeichnet, daß der Ventilkörper (44) an einer Stelle in der Nähe der Einbauöffnung (66) mit einer Montage-Querwand (72) versehen ist.

9. Ventil nach irgendeinem der vorhergehenden Ansprüche, dadurch gekennzeichnet, daß ein Bedienteil (20) in die Bedienstange (26) eingreift, wobei das Bedienteil (20) im allgemeinen parallel zur Verschiebungsrichtung des Absperrbauteils (52) verläuft.

10. Herbizid-Ausbringeinrichtung, umfassend einen Herbizidbehälter (10) und einen Verteilerkopf (4), geeignet zum Verteilen des aus dem Behälter (10) zugeführten Herbizids, wobei der Herbizidfluß aus dem Behälter (10) zum Verteilerkopf (4) von einem Ventil (12) gemäß irgendeinem der vorhergehenden Ansprüche gesteuert wird, und die Bedienstange (26) des Ventils (12) zum Betrieb mit einem Handsteuerteil (14) verbunden ist.

## Revendications

1. Une valve comprenant un corps de valve (44), ayant une entrée (70), une sortie (46) et un siège de valve (48) placé entre l'entrée (70) et la sortie (46), la valve comprenant, de plus, un élément de fermeture de valve (52) qui peut être déplacé à l'intérieur du corps de valve (44) pour ouvrir et fermer la valve, l'élément de fermeture (52) comprenant un élément d'une seule pièce ayant une tête de valve (50) coopérant avec le siège de valve (48), et une tige de commande (26) s'étendant à travers le siège de valve (48) et à travers un passage de guidage (56) dans la paroi du corps de valve (44), le siège de valve (48) étant dans un plan perpendiculaire à la direction du déplacement de mise en oeuvre de l'élément de fermeture (52), caractérisée en ce que l'entrée (70) et la sortie (46) sont alignées l'une avec l'autre, la direction du déplacement de mise en oeuvre de l'élément de fermeture (52) étant oblique par rapport à la direction de l'écoulement à travers l'entrée (70) et la sortie (46) et en ce que le corps de valve (44) a une ouverture d'insertion (66) à travers laquelle, pendant l'assemblage de la valve, l'élément de fermeture (52) est inséré dans le corps de valve (44) dans une direction initiale généralement parallèle à la direction de l'écoulement à travers l'entrée (70) et la sortie (46).

2. Une valve comme revendiquée à la revendication 1, caractérisée en ce que l'entrée (70) est prévue dans l'ouverture d'insertion (66).

3. Une valve comme revendiquée à la revendication 2, caractérisée en ce qu'un bouchon (68) est reçu dans l'ouverture d'insertion (66), l'entrée (70) constituant un passage à travers le bouchon (68).

4. Une valve comme revendiquée à la revendication 3, caractérisée en ce qu'un ressort (54) agit entre l'élément de fermeture (52) et le bouchon (68) pour rappeler l'élément de fermeture (52) vers le siège de valve (48).

5. Une valve comme revendiquée à la revendication 4, caractérisée en ce que le bouchon (68) présente une surface concave, généralement conique, contre laquelle le ressort (54) vient buter.

6. Une valve comme revendiquée à l'une quelconque des revendications précédentes, caractérisée en ce que le passage de guidage (56) est prévu dans un collier (58) qui est placé dans un alésage (60) réalisé dans la paroi de corps de valve (44).

7. Une valve comme revendiquée à la revendication 6, caractérisée en ce que l'alésage (60) a le même diamètre que l'ouverture du siège de valve (48).

8. Une valve comme revendiquée à l'une quelconque des revendications précédentes, caractérisée en ce que le corps de valve (44) est pourvu, à une position adjacente à l'ouverture d'insertion (66), d'une cloison étanche de montage (72).

9. Une valve comme revendiquée à l'une quelconque des revendications précédentes, caractérisée en ce qu'un élément de commande (20) vient en prise avec la tige de commande (26), l'élément de commande (20) s'étendant de manière générale parallèlement à la direction de déplacement de l'élément de fermeture (52).

10. Un applicateur d'herbicide comprenant un réservoir (10) pour herbicide et une tête d'épandage (4) pour répandre l'herbicide provenant du réservoir (10), le débit d'herbicide du réservoir (10) vers la tête d'épandage (4) étant commandé par une valve (12) selon l'une quelconque des revendications précédentes, la tige de commande (26) de la valve (12) étant reliée, pour mise en oeuvre, à un élément de commande manuelle (14).
